(19) Europäisches Patentamt

European Patent Office

Office européen des brevets

(11) **EP 1 091 233 B1**

(12) **EUROPÄISCHE PATENTSCHRIFT**

(45) Veröffentlichungstag und Bekanntmachung des Hinweises auf die Patenterteilung:
**02.11.2006 Patentblatt 2006/44**

(51) Int Cl.:
***G02C 7/02*** *(2006.01)*

(21) Anmeldenummer: **00124460.7**

(22) Anmeldetag: **28.10.1994**

(54) **Brillenglas mit progressiver Wirkung**

Progressive spectacle lens

Verre de lunettes à action progressive

(84) Benannte Vertragsstaaten:
**AT BE CH ES FR GB IT LI LU NL SE**

(30) Priorität: **02.11.1993 DE 4337369**

(43) Veröffentlichungstag der Anmeldung:
**11.04.2001 Patentblatt 2001/15**

(62) Dokumentnummer(n) der früheren Anmeldung(en) nach Art. 76 EPÜ:
**94930936.3 / 0 677 177**

(73) Patentinhaber: **Rodenstock GmbH**
**80469 München (DE)**

(72) Erfinder:
• **Pfeiffer, Herbert**
**81247 München (DE)**

• **Altheimer, Helmut**
**80469 München (DE)**
• **Haimerl, Walter**
**80337 München (DE)**

(74) Vertreter: **Rocke, Carsten**
**Müller-Boré & Partner**
**Grafinger Strasse 2**
**81671 München (DE)**

(56) Entgegenhaltungen:
**EP-A- 0 027 339      EP-A- 0 039 498**
**EP-A- 0 291 094      EP-A- 0 452 802**
**DE-A- 2 044 639      DE-B- 1 145 820**

**Beschreibung**

**Technisches Gebiet**

Die Erfindung bezieht sich auf ein Brillenglas mit progressiver und astigmatischer Wirkung gemäß dem Oberbegriff des Patentanspruchs 1.

**Stand der Technik**

Brillengläser mit progressiver Wirkung gemäß dem Oberbegriff des Patentanspruchs 1 sind beispielsweise aus der DE 30 16 935 C2, der DE-PS 1 145 820, der GB-PS 775 007 oder dem Artikel "VERRES PROGRESSIFS POUR APHAQUES" aus L'Opticien Lunetier, 1971, No 222 bekannt.

Bei den aus der Patentliteratur bekannten und/oder auf dem Markt erhältlichen Brillengläsern mit progressiver Wirkung wird der auf einer Fläche mit variierender Flächenbrechkraft unweigerlich vorhandene Flächenastigmatismus eher als in Kauf zu nehmende Begleiterscheinung betrachtet, deren Betrag zumindest auf dem Hauptmeridian bzw. der Hauptlinie einen physiologisch störenden Wert nicht überschreiten sollte; hierzu wird auf die DE 30 16 935 C2 oder die EP 0 027 339 A2 verwiesen. Häufig ist sogar vorgeschlagen worden, den Hauptmeridian als Nabellinie auszubilden, d.h. als Linie, auf der der Flächenastigmatismus Null ist; hierzu wird exemplarisch auf die DE-AS 20 44 639 oder die DE-PS 28 14 936 verwiesen. Der Achslage des Astigmatismus wird in diesen Druckschriften keine Aufmerksamkeit gewidmet.

Offensichtlich wird hingenommen, daß sich die Achslage des Flächenastigmatismus nach Flächen-theoretischen und nicht nach physiologischen Gesichtspunkten einstellt:

Da sich der Gesamtastigmatismus durch die geometrische Addition des Flächenastigmatismus und des Astigmatismus schiefer Bündel ergibt, kann die Achslage des Gesamtastigmatismus längs des Hauptmeridians bzw. der Hauptlinie (die in etwa der Hauptblicklinie folgen kann) variieren, so daß sich eine das deutliche Sehen behindernde Variation der Achslage des Gesamtastigmatismus längs des Hauptmeridians bzw. längs der Hauptlinie ergibt.

Soll nun mit den bekannten progressiven Flächen ein Brillenglas mit einer torischen bzw. astigmatischen Wirkung realisiert werden, die zu Korrektionszwecken geeignet ist, so wird die zur Korrektion benötige astigmatische Wirkung ausschließlich durch die Ausbildung der zweiten Fläche erzielt:

In diesen Fällem wird dann die zweite Fläche als torische bzw. atorische Fläche (vgl. z.B. die DE 30 16 936 C2) ausgebildet.

Lediglich in der eingangs genannten DE-PS 1 145 820 ist eine Fläche beschrieben, deren Flächenastigmatismus einen konstanten Betrag über die gesamte Fläche hat, so daß unter Berücksichtigung der zweiten Fläche ein Brillenglas mit einem bestimmten Astigmatismus entsteht, der auch Korrektionszwecken dienen kann. Bei diesem bekannten Brillenglas ist die Achslage des Flächenastigmatismus der progressiven Flächen längs des ebenen Hauptmeridians konstant, nämlich 0° bzw. 90°.

Eine hiervon abweichende Achslage muß damit über die zweite Fläche realisiert werden, wobei sich bei Verwendung einer torischen zweiten Fläche dennoch unter Berücksichtigung des Astigmatismus schiefer Bündel ein physiologisch gegebenenfalls störende Variation des Gesamtastigmatismus ergibt.

**Beschreibung der Erfindung**

Der Erfindung liegt der Grundgedanke zugrunde, ein Brillenglas mit progressiver Wirkung, das wenigstens eine Fläche mit sich derart ändernder Flächenbrechkraft aufweist, daß ausgehend von mindestens einem Bereich, in dem die Wirkung des Brillenglases wenigstens annähernd konstant ist, sich die Wirkung des Brillenglases längs einer Linie (i.f. als Hauptlinie bezeichnet) ändert, die in einer Ebene liegend oder gewunden sein kann, und auf der ein vorgebbarer Astigmatismus nicht identisch Null dpt vorhanden ist, derart weiterzubilden, daß sich keine störende Variationen des Betrags und der Achslage des Gesamtastigmatismus ergeben.

Ein erfindungsgemäßes Brillenglas ist im Anspruch 1 angegeben. Erfindungsgemäß weist der Flächenastigmatismus auf der Hauptlinie nicht nur einen bestimmten Betrag, sondern auch eine derartige längs der Hauptlinie nicht konstante Achslage auf, daß der unter Berücksichtigung des Astigmatismus schiefer Bündel resultierende Gesamtastigmatismus des Bündels nach der augenseitigen Fläche längs der Hauptlinie nahezu konstant oder nach physiologischen Anforderungen gestaltet sowohl bezüglich Betrag als auch Achslage ist. Bei dem erfindungsgemäßen Glas ist es also im Gegensatz zum Stand der Technik möglich, nicht nur einen bestimmten Betrag des wenigstens über einen Teil der Hauptlinie von 0 dpt verschiedenen Flächenastigmatismus vorzugeben, sondern auch die Achslage des Flächenastigmatismus vorzugeben. Beispielsweise ändert sich nach der Listingschen Regel die Achslage eines astigmatischen Auges bei Blicksenkung. Dem kann durch eine entsprechende (korrigierende) Drehung der Achslage des Flächenastigmatismus Rechnung getragen werden.

Die durch die erfindungsgemäße Ausbildung mögliche Vorgabe von Betrag und Achslage des Flächenastigmatismus erfolgt unter an sich bekannten physiologischen Gesichtspunkten.

Weiterhin ist das erfindungsgemäße Brillenglas so gestaltet, daß lediglich eine Fläche zur Wirkungsänderung beiträgt, die andere Fläche ist eine Fläche mit astigmatischer Wirkung und insbesondere eine atorische Fläche. Durch die erfindungsgemäße Ausbildung des Hauptmeridians bzw. der Hauptlinie wird zumindest der Hauptteil des zu Korrektionszwecken dienenden Astigmatismus durch den Flächenastigmatismus der Fläche mit sich ändernder Flächenbrechkraft aufgebracht.

Die Hauptlinie existiert nicht nur in der sogenannten Progressionszone, sondern ist auch in den Fernteil und/ oder den Nahteil fortgesetzt.

Weiterhin ist die Hauptlinie in für progressive Brillengläser, bei denen die progressive Fläche keine astigmatische Wirkung hat, bekannter Weise eine im Raum gekrümmte Kurve.

In Anspruch 2 ist eine mögliche Ausführungsform eines erfindungsgemäßen Brillenglases angegeben:

Zur Vorgabe nicht nur eines Wertes des Flächenastigmatismus, sondern auch der Achslage des Flächenastigmatismus längs der Hauptlinie ist die Hauptlinie und der sie umgebende Bereich nach Vorgabe der Projektion $f_1(y)$ der Hauptlinie auf die x,y-Ebene unter physiologischen Gesichtspunkten durch die Minimierung der folgenden Zielfunktion bestimmt.

$$ F = \int_{Y_{min}}^{Y_{max}} [ (\_A - A_v)^2 + (H - \_H_v)^2 + (\varepsilon - \varepsilon_v)^2 ] \, dy $$

wobei $A_v(y)$, $H_v(y)$ und $\varepsilon_v(y)$ die vorgegebenen Flächeneigenschaften entlang der Hauptlinie sind und

$A(y)$     der Flächenastigmatismus
$H(y)$     der Flächenbrechwert, und
$\varepsilon(Y)$     die Achslage des Flächenastigmatismus bezüglich der Horizontalebene sind.

Beschreibung von Ausführungsbeispielen

Die Erfindung wird nachstehend anhand von Ausführungsbeispielen für die Achslagen 0, 30, 45, 60 und 90° näher beschrieben.

TABELLE 1

Brechungsindex: 1.525 Vorgegebene Achslage: .00 Grad

| y | x0(y) | z0(y) | Delta | Kh | D0v | D0 | Astv | Ast | Achse |
|---|---|---|---|---|---|---|---|---|---|
| [mm] | [mm] | [mm] | [Grad] | [Dpt] | [Dpt] | [Dpt] | [Dpt] | [Dpt] | [Grad] |
| 36.0 | .000 | 2.094 | .109 | 3.110 | 2.340 | 2.340 | 1.500 | 1.500 | .00 |
| 34.0 | .000 | 1.873 | .109 | 3.108 | 2.340 | 2.340 | 1.500 | 1.500 | .00 |
| 32.0 | .000 | 1.664 | .109 | 3.106 | 2.340 | 2.340 | 1.500 | 1.500 | .00 |
| 30.0 | .000 | 1.467 | .109 | 3.104 | 2.340 | 2.340 | 1.500 | 1.500 | .00 |
| 28.0 | .000 | 1.283 | .109 | 3.102 | 2.340 | 2.340 | 1.500 | 1.499 | .00 |
| 26.0 | .000 | 1.112 | .108 | 3.100 | 2.341 | 2.340 | 1.500 | 1.499 | .00 |
| 24.0 | -.001 | .952 | .108 | 3.099 | 2.341 | 2.340 | 1.500 | 1.499 | .00 |
| 22.0 | -.002 | .805 | .108 | 3.098 | 2.343 | 2.341 | 1.500 | 1.499 | .00 |
| 20.0 | -.003 | .669 | .107 | 3.098 | 2.343 | 2.342 | 1.500 | 1.499 | .00 |
| 18.0 | -.005 | .546 | .106 | 3.099 | 2.345 | 2.344 | 1.500 | 1.499 | .00 |
| 16.0 | -.010 | .436 | .105 | 3.101 | 2.348 | 2.347 | 1.500 | 1.499 | .00 |
| 14.0 | -.018 | .337 | .102 | 3.105 | 2.353 | 2.352 | 1.500 | 1.499 | .00 |
| 12.0 | -.032 | .251 | .097 | 3.113 | 2.362 | 2.361 | 1.500 | 1.499 | .00 |
| 10.0 | -.057 | .177 | .089 | 3.128 | 2.377 | 2.376 | 1.500 | 1.500 | .00 |
| 8.0 | -.103 | .115 | .073 | 3.152 | 2.400 | 2.400 | 1.500 | 1.501 | .00 |

(fortgesetzt)

Brechungsindex: 1.525 Vorgegebene Achslage: .00 Grad

| y | x0(y) | z0(y) | Delta | Kh | D0v | D0 | Astv | Ast | Achse |
|---|---|---|---|---|---|---|---|---|---|
| [mm] | [mm] | [mm] | [Grad] | [Dpt] | [Dpt] | [Dpt] | [Dpt] | [Dpt] | [Grad] |
| 6.0 | -.181 | .066 | .046 | 3.191 | 2.440 | 2.439 | 1.500 | 1.504 | .00 |
| 4.0 | -.311 | .030 | .000 | 3.255 | 2.503 | 2.502 | 1.500 | 1.507 | .00 |
| 2.0 | -.515 | .008 | -.073 | 3.356 | 2.604 | 2.602 | 1.500 | 1.508 | .00 |
| .0 | -.802 | .000 | -.181 | 3.510 | 2.759 | 2.758 | 1.500 | 1.503 | .00 |
| -2.0 | -1.156 | .008 | -.321 | 3.734 | 2.987 | 2.986 | 1.500 | 1.497 | .00 |
| -4.0 | -1.527 | .035 | -.478 | 4.041 | 3.293 | 3.291 | 1.500 | 1.499 | .00 |
| -6.0 | -1.852 | .082 | -.628 | 4.405 | 3.654 | 3.653 | 1.500 | 1.502 | .00 |
| -8.0 | -2.097 | .150 | -.750 | 4.752 | 3.997 | 4.000 | 1.500 | 1.498 | .00 |
| -10.0 | -2.262 | .243 | -.839 | 4.988 | 4.228 | 4.234 | 1.500 | 1.495 | .00 |
| -12.0 | -2.363 | .361 | -.895 | 5.085 | 4.321 | 4.325 | 1.500 | 1.498 | .00 |
| -14.0 | -2.423 | .506 | -.930 | 5.105 | 4.339 | 4.339 | 1.500 | 1.499 | .00 |
| -16.0 | -2.457 | .678 | -.951 | 5.111 | 4.340 | 4.340 | 1.500 | 1.498 | .00 |
| -18.0 | -2.476 | .878 | -.963 | 5.117 | 4.340 | 4.339 | 1.500 | 1.498 | .00 |
| -20.0 | -2.487 | 1.105 | -.971 | 5.125 | 4.340 | 4.339 | 1.500 | 1.498 | .00 |
| -22.0 | -2.493 | 1.361 | -.977 | 5.135 | 4.340 | 4.339 | 1.500 | 1.499 | .00 |
| -24.0 | -2.496 | 1.644 | -.981 | 5.145 | 4.340 | 4.340 | 1.500 | 1.499 | .00 |
| -26.0 | -2.498 | 1.956 | -.985 | 5.157 | 4.340 | 4.340 | 1.500 | 1.500 | .00 |
| -28.0 | -2.499 | 2.296 | -.989 | 5.169 | 4.340 | 4.340 | 1.500 | 1.500 | .00 |
| -30.0 | -2.499 | 2.665 | -.993 | 5.182 | 4.340 | 4.340 | 1.500 | 1.500 | .00 |
| -32.0 | -2.500 | 3.062 | -.997 | 5.197 | 4.340 | 4.340 | 1.500 | 1.500 | .00 |
| -34.0 | -2.500 | 3.489 | -1.002 | 5.212 | 4.340 | 4.340 | 1.500 | 1.500 | .00 |
| -36.0 | -2.500 | 3.945 | -1.006 | 5.229 | 4.340 | 4.340 | 1.500 | 1.500 | .00 |
| y | x0(y) | z0(y) | Delta | Kh | D0v | D0 | Astv | Ast | Achse |
| [mm] | [mm] | [mm] | [Grad] | [Dpt] | [Dpt] | [DPt] | [Dpt] | [Dpt] | [Grad] |

TABELLE 2

Brechungsindex: 1.525 Vorgegebene Achslage: 30.00 Grad

| y | x0(y) | z0(y) | Delta | Kh | D0v | D0 | Astv | Ast | Achse |
|---|---|---|---|---|---|---|---|---|---|
| [mm] | [mm] | [mm] | [Grad] | [Dpt] | [Dpt] | [Dpt] | [Dpt] | [Dpt] | [Grad] |
| 36.0 | .000 | 2.623 | 2.402 | 2.742 | 2.340 | 2.340 | 1.500 | 1.500 | 30.00 |
| 34.0 | .000 | 2.347 | 2.254 | 2.739 | 2.340 | 2.340 | 1.500 | 1.500 | 30.00 |
| 32.0 | .000 | 2.087 | 2.107 | 2.737 | 2.340 | 2.340 | 1.500 | 1.500 | 30.00 |
| 30.0 | .000 | 1.841 | 1.960 | 2.734 | 2.340 | 2.340 | 1.500 | 1.500 | 30.00 |
| 28.0 | .000 | 1.611 | 1.814 | 2.732 | 2.340 | 2.340 | 1.500 | 1.500 | 30.00 |
| 26.0 | .000 | 1.397 | 1.669 | 2.730 | 2.341 | 2.341 | 1.500 | 1.500 | 30.00 |
| 24.0 | -.001 | 1.197 | 1.524 | 2.728 | 2.341 | 2.341 | 1.500 | 1.500 | 30.00 |
| 22.0 | -.002 | 1.013 | 1.379 | 2.727 | 2.342 | 2.342 | 1.500 | 1.500 | 30.00 |
| 20.0 | -.003 | .844 | 1.235 | 2.727 | 2.343 | 2.343 | 1.500 | 1.500 | 30.00 |
| 18.0 | -.005 | .690 | 1.091 | 2.727 | 2.345 | 2.345 | 1.500 | 1.500 | 30.00 |
| 16.0 | -.010 | .551 | .946 | 2.729 | 2.348 | 2.348 | 1.500 | 1.500 | 30.00 |
| 14.0 | -.018 | .428 | .801 | 2.733 | 2.353 | 2.353 | 1.500 | 1.500 | 29.99 |
| 12.0 | -.032 | .319 | .654 | 2.740 | 2.362 | 2.362 | 1.500 | 1.500 | 29.99 |
| 10.0 | -.057 | .226 | .504 | 2.754 | 2.377 | 2.376 | 1.500 | 1.501 | 29.98 |
| 8.0 | -.103 | .148 | .348 | 2.777 | 2.400 | 2.399 | 1.500 | 1.501 | 29.95 |
| 6.0 | -.181 | .085 | .182 | 2.816 | 2.440 | 2.437 | 1.500 | 1.502 | 29.92 |
| 4.0 | -.311 | .039 | .000 | 2.879 | 2.503 | 2.500 | 1.500 | 1.504 | 29.89 |
| 2.0 | -.515 | .010 | -.207 | 2.979 | 2.604 | 2.601 | 1.500 | 1.503 | 29.92 |

(fortgesetzt)

Brechungsindex: 1.525 Vorgegebene Achslage: 30.00 Grad

| y | x0(y) | z0(y) | Delta | Kh | D0v | D0 | Astv | Ast | Achse |
|---|---|---|---|---|---|---|---|---|---|
| [mm] | [mm] | [mm] | [Grad] | [Dpt] | [Dpt] | [Dpt] | [Dpt] | [Dpt] | [Grad] |
| .0 | -.802 | .000 | -.444 | 3.134 | 2.759 | 2.760 | 1.500 | 1.499 | 30.05 |
| -2.0 | -1.156 | .011 | -.712 | 3.361 | 2.987 | 2.990 | 1.500 | 1.495 | 30.13 |
| -4.0 | -1.527 | .044 | -.995 | 3.669 | 3.293 | 3.294 | 1.500 | 1.499 | 30.01 |
| -6.0 | -1.852 | .102 | -1.274 | 4.032 | 3.654 | 3.652 | 1.500 | 1.503 | 29.90 |
| -8.0 | -2.097 | .185 | -1.529 | 4.376 | 3.997 | 3.997 | 1.500 | 1.500 | 30.01 |
| -10.0 | -2.262 | .295 | -1.754 | 4.611 | 4.228 | 4.231 | 1.500 | 1.497 | 30.11 |
| -12.0 | -2.363 | .433 | -1.950 | 4.709 | 4.321 | 4.323 | 1.500 | 1.498 | 30.08 |
| -14.0 | -2.423 | .601 | -2.127 | 4.733 | 4.339 | 4.339 | 1.500 | 1.499 | 30.02 |
| -16.0 | -2.457 | .798 | -2.291 | 4.741 | 4.340 | 4.340 | 1.500 | 1.500 | 30.01 |
| -18.0 | -2.476 | 1.026 | -2.450 | 4.749 | 4.340 | 4.340 | 1.500 | 1.500 | 30.01 |
| -20.0 | -2.487 | 1.285 | -2.605 | 4.759 | 4.340 | 4.340 | 1.500 | 1.500 | 30.00 |
| -22.0 | -2.493 | 1.574 | -2.760 | 4.769 | 4.340 | 4.340 | 1.500 | 1.500 | 30.00 |
| -24.0 | -2.496 | 1.895 | -2.916 | 4.781 | 4.340 | 4.340 | 1.500 | 1.500 | 30.00 |
| -36.0 | -2.498 | 2.247 | -3.072 | 4.794 | 4.340 | 4.340 | 1.500 | 1.500 | 30.00 |
| -28.0 | -2.499 | 2.631 | -3.231 | 4.808 | 4.340 | 4.340 | 1.500 | 1.500 | 30.00 |
| -30.0 | -2.499 | 3.048 | -3.392 | 4.824 | 4.340 | 4.340 | 1.500 | 1.500 | 30.00 |
| -32.0 | -2.500 | 3.497 | -3.555 | 4.840 | 4.340 | 4.340 | 1.500 | 1.500 | 30.00 |
| -34.0 | -2.500 | 3.979 | -3.721 | 4.859 | 4.340 | 4.340 | 1.500 | 1.500 | 30.00 |
| -36.0 | -2.500 | 4.494 | -3.891 | 4.878 | 4.340 | 4.340 | 1.500 | 1.500 | 29.99 |
| y | x0(y) | z0(y) | Delta | Kh | D0v | D0 | Astv | Ast | Achse |
| [mm] | [mm] | [mm] | [Grad] | [Dpt] | [Dpt] | [Dpt] | [Dpt] | [Dpt] | [Grad] |

## TABELLE 3

Brechungsindex: 1.525 Vorgegebene Achslage: 45.00 Grad

| y | x0 (y) | z0 (y) | Delta | Kh | D0v | D0 | Astv | Ast | Achse |
|---|---|---|---|---|---|---|---|---|---|
| [mm] | [mm] | [mm] | [Grad] | [Dpt] | [Dpt] | [Dpt] | [Dpt] | [Dpt] | [Grad] |
| 36.0 | .000 | 3.188 | 1.868 | 2.374 | 2.340 | 2.340 | 1.000 | 1.000 | 45.00 |
| 34.0 | .000 | 2.854 | 1.753 | 2.371 | 2.340 | 2.340 | 1.000 | 1.000 | 45.00 |
| 32.0 | .000 | 2.539 | 1.639 | 2.367 | 2.340 | 2.340 | 1.000 | 1.000 | 45.00 |
| 30.0 | .000 | 2.242 | 1.525 | 2.364 | 2.340 | 2.340 | 1.000 | 1.000 | 45.00 |
| 28.0 | .000 | 1.964 | 1.412 | 2.362 | 2.341 | 2.341 | 1.000 | 1.000 | 45.00 |
| 26.0 | .000 | 1.704 | 1.300 | 2.360 | 2.341 | 2.341 | 1.000 | 1.000 | 45.00 |
| 24.0 | -.001 | 1.462 | 1.188 | 2.358 | 2.342 | 2.342 | 1.000 | 1.000 | 45.00 |
| 22.0 | -.002 | 1.239 | 1.076 | 2.357 | 2.343 | 2.343 | 1.000 | 1.000 | 45.00 |
| 20.0 | -.003 | 1.033 | .964 | 2.357 | 2.346 | 2.346 | 1.000 | 1.000 | 45.00 |
| 18.0 | -.005 | .846 | .853 | 2.359 | 2.350 | 2.349 | 1.000 | 1.000 | 45.01 |
| 16.0 | -.010 | .677 | .741 | 2.363 | 2.356 | 2.356 | 1.000 | 1.000 | 45.01 |
| 14.0 | -.018 | .526 | .629 | 2.372 | 2.366 | 2.366 | 1.000 | 1.000 | 45.02 |
| 12.0 | -.032 | .394 | .515 | 2.389 | 2.384 | 2.383 | 1.000 | 1.000 | 45.03 |
| 10.0 | -.057 | .279 | .399 | 2.416 | 2.413 | 2.412 | 1.000 | 1.000 | 45.06 |
| 8.0 | -.103 | .183 | .277 | 2.463 | 2.461 | 2.459 | 1.000 | 1.000 | 45.10 |
| 6.0 | -.181 | .106 | .146 | 2.541 | 2.539 | 2.536 | 1.000 | 1.000 | 45.17 |
| 4.0 | -.311 | .049 | .000 | 2.667 | 2.666 | 2.661 | 1.000 | 1.000 | 45.25 |
| 2.0 | -.515 | .013 | -.171 | 2.868 | 2.867 | 2.863 | 1.000 | 1.000 | 45.28 |
| .0 | -.802 | .000 | -.374 | 3.178 | 3.178 | 3.176 | 1.000 | 1.000 | 45.15 |
| -2.0 | -1.156 | .014 | -.615 | 3.633 | 3.633 | 3.633 | 1.000 | 1.000 | 45.00 |
| -4.0 | -1.527 | .058 | -.883 | 4.248 | 4.247 | 4.245 | 1.000 | .999 | 45.10 |

(fortgesetzt)

Brechungsindex: 1.525 Vorgegebene Achslage: 45.00 Grad

| y | x0 (y) | z0 (y) | Delta | Kh | D0v | D0 | Astv | Ast | Achse |
|---|---|---|---|---|---|---|---|---|---|
| [mm] | [mm] | [mm] | [Grad] | [Dpt] | [Dpt] | [Dpt] | [Dpt] | [Dpt] | [Grad] |
| -6.0 | -1.852 | .136 | -1.156 | 4.974 | 4.969 | 4.967 | 1.000 | .999 | 45.11 |
| -8.0 | -2.097 | .253 | -1.409 | 5.666 | 5.653 | 5.658 | 1.000 | 1.000 | 44.74 |
| -10.0 | -2.262 | .412 | -1.628 | 6.140 | 6.115 | 6.124 | 1.000 | 1.001 | 44.51 |
| -12.0 | -2.363 | .617 | -1.811 | 6.342 | 6.302 | 6.307 | 1.000 | 1.000 | 44.74 |
| -14.0 | -2.423 | .870 | -1.970 | 6.397 | 6.338 | 6.338 | 1.000 | 1.000 | 44.97 |
| -16.0 | -2.457 | 1.172 | -2.113 | 6.423 | 6.340 | 6.340 | 1.000 | 1.000 | 45.01 |
| -18.0 | -2.476 | 1.524 | -2.248 | 6.451 | 6.340 | 6.340 | 1.000 | 1.000 | 45.01 |
| -20.0 | -2.487 | 1.926 | -2.381 | 6.483 | 6.340 | 6.340 | 1.000 | 1.000 | 45.02 |
| -22.0 | -2.493 | 2.380 | -2.513 | 6.520 | 6.340 | 6.340 | 1.000 | 1.000 | 45.03 |
| -24.0 | -2.496 | 2.887 | -2.648 | 6.561 | 6.340 | 6.339 | 1.000 | 1.000 | 45.03 |
| -26.0 | -2.498 | 3.448 | -2.786 | 6.607 | 6.340 | 6.339 | 1.000 | 1.000 | 45.04 |
| -28.0 | -2.499 | 4.063 | -2.928 | 6.659 | 6.340 | 6.339 | 1.000 | 1.000 | 45.04 |
| -30.0 | -2.499 | 4.735 | -3.076 | 6.716 | 6.340 | 6.339 | 1.000 | 1.000 | 45.04 |
| -32.0 | -2.500 | 5.464 | -3.229 | 6.779 | 6.340 | 6.339 | 1.000. | 1.000 | 45.05 |
| -34.0 | -2.500 | 6.253 | -3.389 | 6.849 | 6.340 | 6.339 | 1.000 | 1.000 | 45.04 |
| -36.0 | -2.500 | 7.103 | -3.557 | 6.926 | 6.340 | 6.338 | 1.000 | 1.000 | 45.11 |
| y | x0(y) | z0(y) | Delta | Kh | D0v | D0 | Astv | Ast | Achse |
| [mm] | [mm] | [mm] | [Grad] | [Dpt] | [Dpt] | [Dpt] | [Dpt] | [Dpt] | [Grad] |

TABELLE 4

Brechungsindex: 1.525 Vorgegebene Achslage: 60.00 Grad

| y | x0(y) | z0(y) | Delta | Kh | D0v | D0 | Astv | Ast | Achse |
|---|---|---|---|---|---|---|---|---|---|
| [mm] | [mm] | [mm] | [Grad] | [Dpt] | [Dpt] | [Dpt] | [Dpt] | [Dpt] | [Grad] |
| 36.0 | .000 | 3.566 | 2.391 | 2.002 | 2.340 | 2.340 | 1.500 | 1.500 | 60.00 |
| 34.0 | .000 | 3.186 | 2.241 | 1.998 | 2.340 | 2.340 | 1.500 | 1.500 | 60.00 |
| 32.0 | .000 | 2.827 | 2.092 | 1.995 | 2.340 | 2.340 | 1.500 | 1.500 | 60.00 |
| 30.0 | .000 | 2.491 | 1.943 | 1.991 | 2.340 | 2.340 | 1.500 | 1.500 | 60.00 |
| 28.0 | .000 | 2.176 | 1.796 | 1.988 | 2.340 | 2.340 | 1.500 | 1.500 | 60.00 |
| 26.0 | .000 | 1.882 | 1.649 | 1.985 | 2.341 | 2.341 | 1.500 | 1.500 | 60.00 |
| 24.0 | -.001 | 1.610 | 1.503 | 1.983 | 2.341 | 2.341 | 1.500 | 1.500 | 60.00 |
| 22.0 | -.002 | 1.359 | 1.357 | 1.981 | 2.342 | 2.342 | 1.500 | 1.500 | 60.00 |
| 20.0 | -.003 | 1.130 | 1.212 | 1.980 | 2.343 | 2.343 | 1.500 | 1.500 | 60.00 |
| 18.0 | -.005 | .921 | 1.067 | 1.979 | 2.345 | 2.345 | 1.500 | 1.500 | 60.00 |
| 16.0 | -.010 | .733 | .923 | 1.981 | 2.348 | 2.348 | 1.500 | 1.500 | 60.00 |
| 14.0 | -.018 | .567 | .778 | 1.984 | 2.353 | 2.353 | 1.500 | 1.500 | 59.99 |
| 12.0 | -.032 | .421 | .632 | 1.992 | 2.362 | 2.362 | 1.500 | 1.500 | 59.99 |
| 10.0 | -.057 | .296 | .484 | 2.005 | 2.377 | 2.376 | 1.500 | 1.499 | 59.98 |
| 8.0 | -.103 | .193 | .331 | 2.028 | 2.400 | 2.399 | 1.500 | 1.499 | 59.96 |
| 6.0 | -.181 | .111 | .172 | 2.066 | 2.440 | 2.437 | 1.500 | 1.498 | 59.92 |
| 4.0 | -.311 | .050 | .000 | 2.129 | 2.503 | 2.500 | 1.500 | 1.497 | 59.89 |
| 2.0 | -.515 | .013 | -.190 | 2.229 | 2.604 | 2.601 | 1.500 | 1.498 | 59.91 |
| .0 | -.802 | .000 | -.404 | 2.384 | 2.759 | 2.760 | 1.500 | 1.501 | 60.03 |
| -2.0 | -1.156 | .014 | -.642 | 2.611 | 2.987 | 2.989 | 1.500 | 1.503 | 60.11 |
| -4.0 | -1.527 | .055 | -.896 | 2.919 | 3.293 | 3.293 | 1.500 | 1.500 | 60.01 |
| -6.0 | -1.852 | .127 | -1.148 | 3.282 | 3.654 | 3.652 | 1.500 | 1.497 | 59.92 |
| -8.0 | -2.097 | .230 | -1.383 | 3.628 | 3.997 | 3.997 | 1.500 | 1.501 | 60.02 |
| -10.0 | -2.262 | .365 | -1.594 | 3.863 | 4.228 | 4.231 | 1.500 | 1.504 | 60.11 |

(fortgesetzt)

Brechungsindex: 1.525 Vorgegebene Achslage: 60.00 Grad

| y [mm] | x0(y) [mm] | z0(y) [mm] | Delta [Grad] | Kh [Dpt] | D0v [Dpt] | D0 [Dpt] | Astv [Dpt] | Ast [Dpt] | Achse [Grad] |
|---|---|---|---|---|---|---|---|---|---|
| -12.0 | -2.363 | .535 | -1.783 | 3.963 | 4.321 | 4.323 | 1.500 | 1.502 | 60.07 |
| -14.0 | -2.423 | .740 | -1.955 | 3.988 | 4.339 | 4.339 | 1.500 | 1.500 | 60.01 |
| -16.0 | -2.457 | .982 | -2.117 | 3.998 | 4.340 | 4.340 | 1.500 | 1.500 | 60.00 |
| -18.0 | -2.476 | 1.259 | -2.275 | 4.008 | 4.340 | 4.340 | 1.500 | 1.500 | 60.00 |
| -20.0 | -2.487 | 1.574 | -2.430 | 4.019 | 4.340 | 4.340 | 1.500 | 1.500 | 60.00 |
| -22.0 | -2.493 | 1.926 | -2.586 | 4.032 | 4.340 | 4.340 | 1.500 | 1.500 | 60.00 |
| -24.0 | -2.496 | 2.316 | -2.742 | 4.047 | 4.340 | 4.340 | 1.500 | 1.500 | 59.99 |
| -26.0 | -2.498 | 2.744 | -2.901 | 4.063 | 4.340 | 4.340 | 1.500 | 1.500 | 59.99 |
| -28.0 | -2.499 | 3.211 | -3.061 | 4.080 | 4.340 | 4.340 | 1.500 | 1.500 | 59.99 |
| -30.0 | -2.499 | 3.718 | -3.225 | 4.099 | 4.340 | 4.340 | 1.500 | 1.500 | 59.99 |
| -32.0 | -2.500 | 4.264 | -3.392 | 4.120 | 4.340 | 4.340 | 1.500 | 1.500 | 59.99 |
| -34.0 | -2.500 | 4.851 | -3.562 | 4.143 | 4.340 | 4.340 | 1.500 | 1.500 | 59.99 |
| -36.0 | -2.500 | 5.479 | -3.735 | 4.168 | 4.340 | 4.339 | 1.500 | 1.499 | 59.98 |
| y [mm] | x0(y) [mm] | z0(y) [mm] | Delta [Grad] | Kh [Dpt] | D0v [Dpt] | D0 [Dpt] | Astv [DPt] | Ast [Dpt] | Achse [Grad] |

## TABELLE 5

Brechungsindex: 1.525 Vorgegebene Achslage: 90.00 Grad

| y [mm] | x0(y) [mm] | z0(y) [mm] | Delta [Grad] | Kh [Dpt] | D0v [Dpt] | D0 [Dpt] | Astv [Dpt] | Ast [Dpt] | Achse [Grad] |
|---|---|---|---|---|---|---|---|---|---|
| 36.0 | .000 | 3.977 | .058 | 1.628 | 2.340 | 2.340 | 1.500 | 1.500 | 90.00 |
| 34.0 | .000 | 3.548 | .058 | 1.624 | 2.340 | 2.340 | 1.500 | 1.500 | -90.00 |
| 32.0 | .000 | 3.145 | .058 | 1.620 | 2.340 | 2.340 | 1.500 | 1.500 | -90.00 |
| 30.0 | .000 | 2.766 | .057 | 1.617 | 2.340 | 2.340 | 1.500 | 1.500 | -90.00 |
| 28.0 | .000 | 2.412 | .057 | 1.613 | 2.340 | 2.340 | 1.500 | 1.500 | -90.00 |
| 26.0 | .000 | 2.082 | .057 | 1.611 | 2.341 | 2.341 | 1.500 | 1.500 | -90.00 |
| 24.0 | -.001 | 1.777 | .057 | 1.608 | 2.341 | 2.341 | 1.500 | 1.500 | -90.00 |
| 22.0 | -.002 | 1.497 | .057 | 1.606 | 2.342 | 2.342 | 1.500 | 1.500 | -90.00 |
| 20.0 | -.003 | 1.240 | .057 | 1.605 | 2.343 | 2.343 | 1.500 | 1.500 | -90.00 |
| 18.0 | -.005 | 1.008 | .056 | 1.604 | 2.345 | 2.345 | 1.500 | 1.500 | -90.00 |
| 16.0 | -.010 | .800 | .055 | 1.606 | 2.348 | 2.348 | 1.500 | 1.500 | -90.00 |
| 14.0 | -.018 | .615 | .054 | 1.609 | 2.353 | 2.353 | 1.500 | 1.500 | -90.00 |
| 12.0 | -.032 | .455 | .051 | 1.616 | 2.362 | 2.362 | 1.500 | 1.499 | -90.00 |
| 10.0 | -.057 | .318 | .047 | 1.630 | 2.377 | 2.376 | 1.500 | 1.499 | -90.00 |
| 8.0 | -.103 | .205 | .039 | 1.653 | 2.400 | 2.400 | 1.500 | 1.499 | -90.00 |
| 6.0 | -.181 | .117 | .024 | 1.691 | 2.440 | 2.438 | 1.500 | 1.498 | 90.00 |
| 4.0 | -.311 | .053 | .000 | 1.754 | 2.503 | 2.501 | 1.500 | 1.496 | 90.00 |
| 2.0 | -.515 | .013 | -.040 | 1.854 | 2.604 | 2.601 | 1.500 | 1.495 | 89.99 |
| .0 | -.802 | .000 | -.101 | 2.009 | 2.759 | 2.757 | 1.500 | 1.496 | 90.00 |
| -2.0 | -1.156 | .014 | -.182 | 2.237 | 2.987 | 2.986 | 1.500 | 1.498 | -89.99 |
| -4.0 | -1.527 | .057 | -.279 | 2.544 | 3.293 | 3.292 | 1.500 | 1.498 | -89.99 |
| -6.0 | -1.852 | .131 | -.375 | 2.907 | 3.654 | 3.654 | 1.500 | 1.499 | -89.99 |
| -8.0 | -2.097 | .239 | -.458 | 3.253 | 3.997 | 3.999 | 1.500 | 1.506 | 90.00 |
| -10.0 | -2.262 | .383 | -.519 | 3.489 | 4.228 | 4.232 | 1.500 | 1.509 | 89.99 |
| -12.0 | -2.363 | .565 | -.559 | 3.589 | 4.321 | 4.323 | 1.500 | 1.505 | 90.00 |
| -14.0 | -2.423 | .785 | -.583 | 3.614 | 4.339 | 4.339 | 1.500 | 1.501 | -90.00 |
| -16.0 | -2.451 | 1.045 | -.598 | 3.625 | 4.340 | 4.340 | 1.500 | 1.500 | -90.00 |

(fortgesetzt)

Brechungsindex: 1.525 Vorgegebene Achslage: 90.00 Grad

| y | x0(y) | z0(y) | Delta | Kh | D0v | D0 | Astv | Ast | Achse |
|---|---|---|---|---|---|---|---|---|---|
| [mm] | [mm] | [mm] | [Grad] | [Dpt] | [Dpt] | [Dpt] | [Dpt] | [Dpt] | [Grad] |
| -18.0 | -2.476 | 1.344 | -.601 | 3.635 | 4.340 | 4.340 | 1.500 | 1.500 | -90.00 |
| -30.0 | -2.487 | 1.684 | -.612 | 3.648 | 4.340 | 4.340 | 1.500 | 1.500 | -90.00 |
| -22.0 | -2.493 | 2.065 | -.616 | 3.661 | 4.340 | 4.340 | 1.500 | 1.500 | -90.00 |
| -24.0 | -3.496 | 2.486 | -.619 | 3.677 | 4.340 | 4.340 | 1.500 | 1.499 | -90.00 |
| -26.0 | -2.498 | 2.949 | -.622 | 3.694 | 4.340 | 4.340 | 1.500 | 1.499 | -90.00 |
| -28.0 | -2.499 | 3.455 | -.625 | 3.712 | 4.340 | 4.340 | 1.500 | 1.499 | -90.00 |
| -30.0 | -2.499 | 4.003 | -.627 | 3.733 | 4.340 | 4.340 | 1.500 | 1.499 | -90.00 |
| -32.0 | -2.500 | 4.595 | -.630 | 3.755 | 4.340 | 4.340 | 1.500 | 1.499 | -90.00 |
| -34.0 | -2.500 | 5.231 | -.633 | 3.780 | 4.340 | 4.340 | 1.500 | 1.499 | -90.00 |
| -36.0 | -2.500 | 5.913 | -.636 | 3.806 | 4.340 | 4.339 | 1.500 | 1.499 | 90.00 |
| y | x0(y) | z0(y) | Delta | Kh | D0v | D0 | Astv | Ast | Achse |
| [mm] | [mm] | [mm] | [Grad] | [Dpt] | [Dpt] | [Dpt] | [Dpt] | [Dpt] | [Grad] |

In den Tabellen sind fünf Ausführungsbeispiele für erfindungsgemäße Flächen mit unterschiedlicher Achslage, nämlich 0° bzw. 180°, 30°, 45°, 60° und 90° angegeben. Dabei ist für jede Fläche jeweils nur ein Streifen entlang des gewundenen Hauptmeridians angegeben. Ist dieser Streifen erfindungsgemäß festgelegt, so kann die restliche Fläche in an sich bekannter Weise ausgehend von dem Streifen entlang des Hauptmeridians berechnet werden.

In den Tabellen bedeuten im einzelnen:

x, y und z sind die Koordinaten eines kartesischen Koordinatensystems, das so gewählt ist, daß die y-Achse in vertikaler Richtung (in Gebrauchsstellung des Brillenglases) und die x-Achse in horizontaler Richtung verlaufen. Der Nullpunkt des Koordinatensystems liegt im allgemeinen nicht auf der Fläche, sondern auf der Projektion der Hauptlinie auf die y, z-Ebene. Die z-Koordinate gibt damit den Abstand der Flächen von der x, y-Ebene an, d.h. den Abstand eines Flächenpunktes mit den Koordinaten x und y von einer Ebene.

In den fünf Tabellen sind in den jeweils ersten drei Spalten für y-Werte von +36 mm bis -36 mm die Koordinaten x0 und z0 von Punkten auf der Hauptlinie des Brillenglases angegeben. Die vierte Spalte gibt die Steigung Delta (in Grad) der Horizontalschnitte y=const. bezüglich der x-Achse als Funktion der Koordinate y an, während die fünfte Spalte die Krümmung Kh (in Dpt) der Horizontalschnitte im Schnittpunkt (x0, z0) mit der Hauptlinie angibt.

In den Spalten 6 folg. sind ferner folgende Werte angegeben:

D0v  Vorgabewerte für den Flächenbrechwert auf der Hauptlinie in Dpt.
D0  tatsächlicher Flächenbrechwert auf der Hauptlinie
Astv  Vorgabewert für den Flächenastigmatismus auf der Hauptlinie in Dpt.
Ast  tatsächlicher Flächenastigmatismus auf der Hauptlinie
Achse  tatsächliche Achslage in Grad.

Die vier Funktionen x0(y), z0y), Delta(y) und Kh(y) bestimmen die Flächeneigenschaften eines infinitesimalen Streifens entlang der Hauptlinie eindeutig. Umgekehrt sind die Funktionen z0(y), Delta(y) und Kh(y) eindeutig durch die Vorgabe des Verlaufs des Flächenbrechwertes D0v(y), des Flächenastigmatismus Astv(y) und der Achslage bestimmt.

Wie den Tabellen zu entnehmen ist, können bei dem erfindungsgemäßen Brillenglas die Vorgabewerte längs der Hauptlinie mit großer Übereinstimmung eingehalten werden.

**Patentansprüche**

1.  Brillenglas mit progressiver und astigmatischer Wirkung, das eine Fläche aufweist, deren Flächenbrechkraft sich ausgehend von mindestens einem Bereich, in dem die Wirkung des Brillenglases zumindest annähernd konstant ist, sich längs wenigstens einer Linie (i. f. als Hauptlinie bezeichnet) ändert, und bei dem die Fläche, die zur Änderung der Wirkung beiträgt, auch zu dem zu Korrektionszwecken dienenden Astigmatismus beiträgt, **gekennzeichnet durch** die Kombination folgender Merkmale

- die zweite Fläche ist eine Fläche mit astigmatischer Wirkung und insbesondere eine atorische Fläche,
- die Hauptlinie ist eine gewundene Linie, die in etwa mit der Hauptblicklinie zusammenfällt, die das Auge bei

**8**

einer Blicksenkung beschreibt,
- die Hauptlinie existiert auch in den Bereichen mit zumindest annähernd konstanter Wirkung,
- der Flächenastigmatismus hat auf der Hauptlinie nicht nur einen bestimmten Betrag, sondern auch eine derartige längs der Hauptlinie nicht konstante Achslage, daß der unter Berücksichtigung des Astigmatismus schiefer Bündel resultierende Gesamtastigmatismus des Strahlenbündels nach der augenseitigen Fläche längs der Hauptlinie nahezu konstant oder nach physiologischen Anforderungen variabel sowohl bezüglich Betrag als auch Achslage ist.

**2.** Brillenglas nach Anspruch 1,
**dadurch gekennzeichnet, daß** zur Vorgabe nicht nur eines Wertes des Flächenastigmatismus, sondern auch der Achslage des Flächenastigmatismus längs der Hauptlinie die Hauptlinie und der sie umgebende Bereich nach Vorgabe der Projektion $f_1(y)$ der Hauptlinie auf die x,y-Ebene unter physiologischen Gesichtspunkten durch die Minimierung der folgenden Zielfunktion F bestimmt sind:

$$F = \int_{Y_{min}}^{Y_{max}} [(A - A_v)^2 + (H - H_v)^2 + (\varepsilon - \varepsilon_v)^2] \, dy$$

wobei $A_v(y)$, $H_v(y)$ und $\varepsilon_v(y)$ die vorgegebenen Flächeneigenschaften entlang der Hauptlinie und

$A(y)$ der Flächenastigmatismus,
$H(y)$ der Flächenbrechwert, und
$\varepsilon(y)$ die Achslage des Flächenastigmatismus bezüglich der Horizontalebene sind.

## Claims

**1.** Spectacle lens with progressive and astigmatic effect, which has a surface, the surface power of which, extending from at least one region in which the effect of the spectacle lens is almost virtually constant, changes at least along one line (hereafter referred to as the principal line) and with said surface power the surface, which contributes to the change in effect, also contributes to the astigmatism used for correction purposes,
**characterised by** the combination of the following features:

• the second surface is a surface with astigmatic effect and in particular an atoric surface,
• the principal line is a spiral line, which coincides approximately with the main viewing line that the eye describes when lowering vision,
• the principal line also exists in the regions with at least virtually constant effect,
• the surface astigmatism not only has a specific amount on the principal line but also has such a non-constant axial position along the principal line that the resulting overall astigmatism of the light bundle, taking into consideration the astigmatism of oblique bundles, after the surface on the eye side along the principal line is virtually constant or according to physiological requirements is variable both with respect to amount and to axial position.

**2.** Spectacle lens according to Claim 1, **characterised in that** for predetermination not only of a value of the surface astigmatism but also the axial position of the surface astigmatism along the principal line, after predetermination of the projection $f_1(y)$ of the principal line onto the x,y plane, from physiological viewpoints, the principal line and the region surrounding it are determined by minimisation of the following target function F:

$$F = \int_{y_{min}}^{y_{max}} [(A - A_v)^2 + (H - H_v)^2 + (\varepsilon - \varepsilon_v)^2] \, dy$$

wherein $A_v(y)$, $H_v(y)$ and $\varepsilon_v(y)$ are the predetermined surface properties along the principal line and
$A(y)$ is the surface astigmatism,

H(y) is the surface power and

ε(y) is the axial position of the surface astigmatism with respect to the horizontal plane.

**Revendications**

1. Verre de lunette à action progressive et astigmatique qui présente une surface dont l'indice de réfraction change au moins le long d'une ligne (décrite comme la ligne principale) à partir d'au moins un domaine dans lequel l'action du verre de lunette est au moins quasi-constante, et pour lequel la surface qui contribue à la modification de l'action contribue aussi à l'astigmatisme correctif, **caractérisé par** l'association des caractéristiques suivantes :

   - la seconde surface est une surface avec une action astigmatique et en particulier une surface atorique,
   - la ligne principale est une ligne courbée qui coïncide à peu près avec la ligne visuelle principale que l'oeil décrit lors d'un abaissement du regard,
   - la ligne principale existe aussi dans les domaines à action au moins à peu près constante,
   - l'astigmatisme de surface n'a pas seulement une valeur déterminée sur la ligne principale, mais aussi une orientation non constante le long de la ligne principale, de sorte que l'astigmatisme total qui résulte de la prise en compte des faisceaux obliques de l'astigmatisme est presque constant le long de la ligne principale en fonction de la surface du côté de l'oeil, ou est variable en fonction d'exigences physiologiques aussi bien du point de vue du total que de l'orientation.

2. Verre de lunette selon la revendication 1 **caractérisé en ce que** pour l'attribution non seulement d'une valeur pour l'astigmatisme de surface, mais aussi de l'orientation de l'astigmatisme le long de la ligne principale, la ligne principale et le domaine qui l'entoure sont déterminés en fonction de la projection $f_1(y)$ de la ligne principale sur le plan (x,y) sous des points de vue physiologiques par la minimisation de la fonction cible F suivante :

$$F = \int_{y_{min}}^{y_{max}} [(A - A_v)^2 + (H - H_v)^2 + (\varepsilon - \varepsilon_v)^2] \, dy$$

où :

A$_v$(y), H$_v$(y) et ε$_v$(y) sont les propriétés de surface fixées préalablement le long de la ligne principale,
A(y) est l'astigmatisme de surface
H(y) est l'indice de réfraction de la surface, et
ε(y) est la position de l'orientation de l'astigmatisme de surface par rapport à l'horizontale.